# EUROPEAN PATENT SPECIFICATION

(11) **EP 2 383 485 B1**
(45) Date of publication and mention of the grant of the patent: **13.02.2013**
(21) Application number: 10161697.7
(22) Date of filing: 30.04.2010
(51) Int. Cl.: F16D 65/092

(54) **Brake pads for wet braking performance**
Bremsbeläge für verbessertes Nassbremsverhalten
Procédé et dispositif pour générer une document d'ontologie

(43) Date of publication of application: 02.11.2011
(73) Proprietor: Brembo SGL Carbon Ceramic Brakes GmbH, 86405 Meitingen (DE)
(72) Inventor: Güther, Hans-Michael, 61462, Königstein (DE)
(74) Representative: Deckers, Hellmuth Alexander

(56) References cited:
- WO-A1-93/07402
- WO-A1-96/07034
- DE-A1- 2 539 557
- GB-A- 1 025 881
- US-A- 6 139 413
- US-B1- 6 505 723

## Description

### Field of the Invention

This invention relates to brake pads having improved wet braking performance.

### Background of the Invention

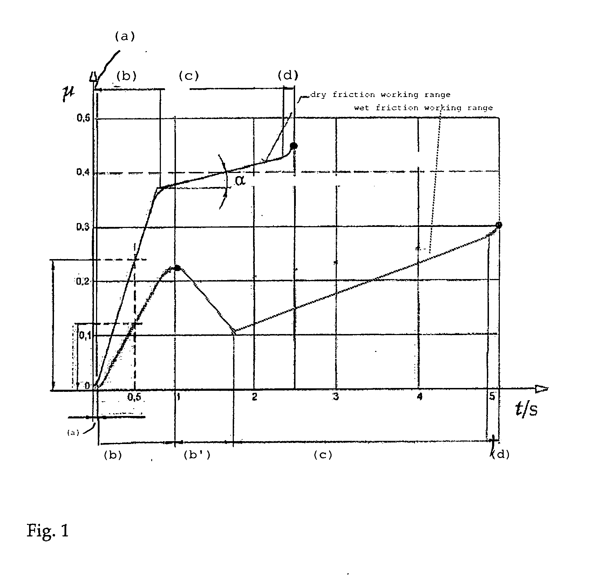

In the process of braking where a brake pad is brought into frictional contact with a brake ring, the following different phases are recognised in a graph of the coefficient of friction *µ* versus time *t* (see Fig. 1): a very short phase (a) with low inclination, where the pressure between the brake pad and the friction surface of the brake ring is initiated, a steep linear or substantially linear phase (b) where the coefficient of friction rises proportionally to time, distinguished by a large build-up of pressure between the brake pad and the friction surface of the brake ring which is in contact with the brake pad, accompanied by a rise in temperature; a phase (c) of lower inclination having an angle α_{d} = tan (Δµ / Δ*t*) commonly referred to as incitation angle of the coefficient of friction, and finally a phase (d) characterised by a fourth, very steep inclination terminating into a transition from sliding or dynamic friction to contact or static friction. The third phase (c) where the coefficient of dynamic friction varies only slowly with increasing time (or brake pressure) is most important for the driver's subjective feeling of safety, and is referred to as the "working range" of the brake.

Under wet conditions, phase (b) has a significantly lower inclination, and a lower coefficient of friction at the end of this phase, compared to dry conditions, and transitions into an additional phase (b') where the coefficient of dynamic friction decreases over time. This loss in friction performance triggers a loss of safety feeling. Following this phase (b'), a similar behaviour as under dry conditions is found for phase (c), however, with a much broader time window, and the inclination α_{w} may even be higher than in the dry conditions case. The time to transition to static friction in phase (d) is much longer that under dry conditions, about twice as long as a rule of thumb. The coefficient of static friction under wet conditions at the end of phase (d) is also markedly lower than under dry conditions.

Under wet conditions, the following processes occur: in phase (a), the water film formed on the friction surfaces of brake ring and brake pads is wiped off to a substantial extent; in phase (b), the coefficient of dynamic friction increases largely with increasing pressure and temperature; in phase (b'), water is vapourised upon reaching the required temperature in the friction zone between pad and brake ring, thereby reducing the pressure by its own vapour pressure, and leading to a decrease in dynamic friction; in phase (c), an increase in the coefficient of dynamic friction is again seen due to removal of water vapour through porosity in both friction disk and pads, perforated friction disk surfaces, and grooves in the pads, which increase may differ from that of the dry state, and does not lead to the same range for the coefficient of dynamic friction, and finally, in phase (d), the transition to static friction.

The problem to be solved is to shorten phase (b') as much as possible, and to reduce the drop in dynamic friction during that phase (b').

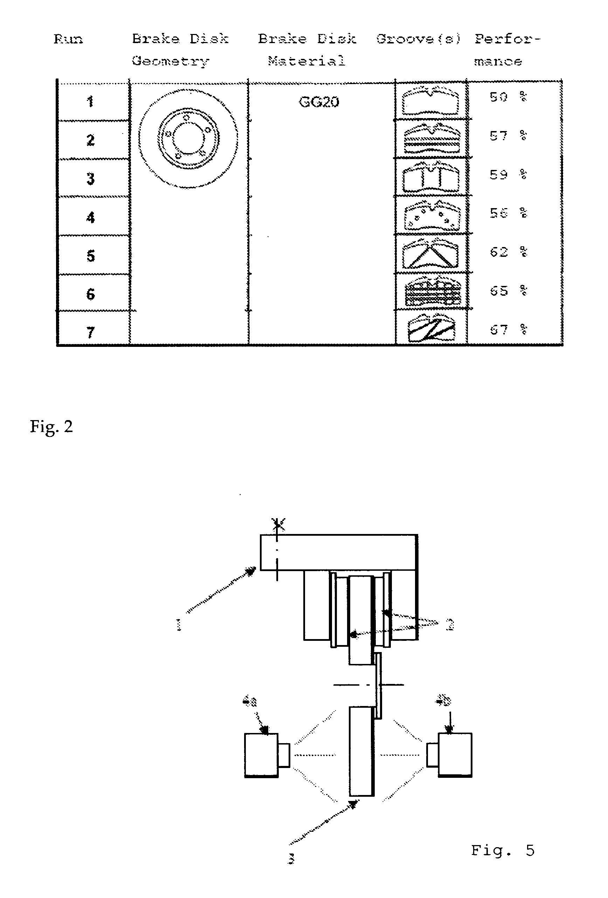

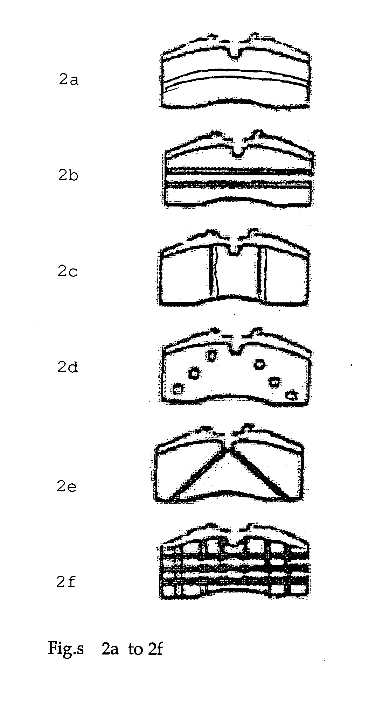

Various groove geometries in the brake pads have been used to deal with this problem. These include circular grooves that are concentric with the wheel axle, one or more grooves parallel to a secant of the pad, one or more grooves that are perpendicular to a secant of the pad, series of bores, grooves that extend from the centre of the outer periphery of the brake pad towards the inner rounded corners, grooves that are grid-like arranged, as is shown in Fig. 2 a to 2 f. Some of these geometries, particularly that depicted in Fig. 2f, having a grid-like arrangement of grooves, is not acceptable due to the high level of noise during braking and the increased wear of the brake pad.

In DE-A-25 39 557 a friction brake is disclosed having brake pads wherein the brake pads have at least one wiping element for liquids, with a linear groove arranged before the wiping edge of the said wiping element (claims 1, 2). Further linear grooves may be provided within the wiping element (claim 3). Due to this constriction, at least the neighbouring grooves have to be parallel.

As the grooves according to the present invention have to have a Z- or S-shaped configuration, D1 does not anticipate the subject matter of the present invention as claimed in the amended claims.

WO-A-96/07034 discloses brake pads having at least one series of linear parallel or circular grooves, with a high number of grooves. While such a configuration may exhibit good wet braking behaviour, it had been found in the experiments that four or more grooves in a brake pad lead to noise generation, and also to increasing wear of the brake pads.

In US-A-6 139 413, a method of resurfacing a rotatable brake member is disclosed which comprises creating a plurality of grooves in the braking surface of a brake disk rotor while having replaced the brake shoes wit the resurfacing tool of this document.

### Summary of the Invention

It has been found, in the experiments that have led to the present invention, that water can be removed fast if at least two, and not more than four, preferably linear grooves are provided in the friction surface of the brake pad, where these grooves obey a set of rules for the position and orientation in the brake pad.

One object of the invention is therefore to provide a brake pad having three linear grooves, where at least two of these grooves are parallel to each other, and where the angle between each and any of the grooves and a straight line which is the axis of mirror symmetry of the brake pad and is parallel to a radius of the brake disk when the brake pad is used in combination with a brake disk, is between 30° and 85° or between 95° and 150°.

### Detailed Description of the Preferred Embodiments

Where the direction of rotation of the friction disk with relation to the pad is from left to right in the top part of the Z has proven to be particularly efficient in a broad range of speeds. It is therefore an object of the invention to provide a brake pad having three grooves that are arranged in the form of a Z.

It has further been found that for moderate speeds, in the range of up to 100 km/h, the best results with regard to duration of phase (b') and the coefficient of dynamic friction at the onset of phase (c) were seen with three grooves, when the angle between the axis of symmetry through the centre of the brake pad and each of the grooves, individually and separately, is between 35° and 55 °, preferably between 40° and 50 °, and particularly preferred, from 42° to 48 °. In this case it is preferred that all three grooves are parallel.

Preferred width of the grooves is between 1 mm and 5 mm, particularly preferred between 1.5 mm and 4.5 mm, and especially preferred, between 2 mm and 4 mm. An efficient groove has a depth of at least 2 mm, measured from the surface of a new (unused) brake pad, and preferably extends vertically downwards, i.e., in the direction of the fixing plate of the brake pad, and parallel to the normal on the plane of this plate, so that a thickness of preferably at least 1 mm, particularly preferably, at least 1.5 mm, and especially preferred, at least 2 mm, of the brake pad fixed to the fixing plate remains at the ground of the groove.

In the case of a Z-shape, it is preferred that the upper and the lower bar of the Z are parallel, and enclose an angle β of from 70° to 60° with the axis of symmetry of the brake pad, while the middle bar has an angle γ with the axis of symmetry of between 40° and 50°. This Z shape provide an efficient removal of liquid water and water vapour over the range of speeds up to 150 km/h.

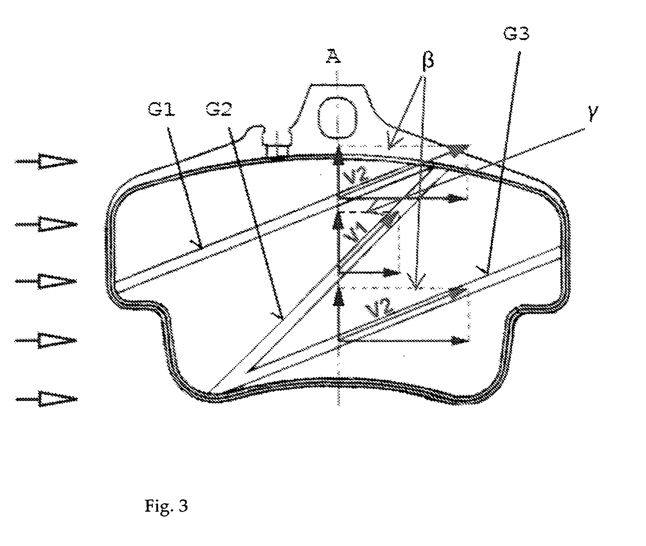

In a preferred geometry, the middle stroke G2 of the Z is divided in half by the line A of symmetry in the brake pad as shown in Fig. 3.

The grooves of this invention are preferably always made in a way that they are open at their ends, i.e., at the intersections with the periphery of the brake pad. These grooves are preferably prepared by milling brake pads fixed to a fixing or backing plate, and have therefore sharp edges which have an angle of preferably about 90° ± 5°.

A further possibility is a mirrored "Z" which is hereinafter referred to as an "S" shape of the grooves in the case that three grooves are used, where the direction of rotation of the friction disk with relation to the pad is from left to right in the top part of the S has proven to be particularly efficient in a broad range of speeds. It is therefore a further object of the invention to provide a brake pad having three grooves that are preferably arranged in the form of a S. In the case of a S-shape, it is preferred that the upper and the lower bar of the S are parallel, and enclose an angle β of from 70° to 60° with the axis of symmetry of the brake pad, while the middle bar has an angle γ with the axis of symmetry of between 5° and 50°. This S shape also provides an efficient removal of liquid water and water vapour for higher speeds than 150 km/h. One preferred geometry can be made as that of Fig. 3, where the middle stroke G2 of the "Z" is replaced by a groove that connects the left hand lower end of groove G1 with the right hand upper end of groove G3.

In a preferred geometry, the middle stroke G2 of the S is divided in half by the line A of symmetry in the brake pad as shown in Fig. 3. The grooves are made in a way that they are open at their ends, i. e., at the intersections with the periphery of the brake pad.

The skew geometry as described by the angles mentioned supra, both in the S and in the Z form, has been shown to proved an auto-accelerating dynamic effect with regard to water removal. A further advantage is the negligible impairment of the bending modulus of the brake pad unit, i. e. the pad material including the base metal plate. In contrast to geometries having a lower angle than 35°, the geometries according to the invention also cause less noise when braking.

The invention is further explained by the attached figures. In these,
Fig. 1 shows a graph of the development of the value of the coefficient µ of dynamic friction over time *t* after initiation of a braking process for dry and wet conditions until static friction is reached,
Fig. 2 shows a comparison of different groove geometries with identical brake rings and brake pads made of the same pad material, but with different groove geometries and identical groove depth and thicknesses,
Fig.s 2a to 2f show different groove geometries,
Fig. 3 shows the geometry of three grooves arranged in the shape of a Z shaped groove,
Fig. 4 shows the geometry of three parallel skew grooves, not falling within the scope of the claims, and
Fig. 5 shows the experimental setup to test brake pads for their wet and dry performances.

As can be seen from Fig. 2, a customary organic-bound brake pad in a quality used as OEM part (initially used in new motor cars) in combination with a brake disk ring made from grey cast iron (such as type GG20) has a reduced wet brake performance *P* of only 50 % (top line, run 1) of the same combination of materials and the identical sizes under dry conditions when the brake experiment is conducted under wet conditions (a brake ring is sprayed with 3 L/min of salt water in equal shares from both sides, with a mass fraction of NaCl in the solution of 3 g / 100 g, and a mass fraction of CaCl₂ in the solution of 0.4 g / 100 g).

Fig. 5 shows the experimental setup for the wet brake tests, where only the functional parts are shown, **1** being the brake caliper equipped with two brake pads **2**. The brake disk rotor **3** is wetted by spraying salt water solution from jets **4a** and **4b** on both sides of the brake disk rotor **3**. In a test, the brake disk rotor **3** is brought to a constant velocity corresponding to a linear speed of 80 km/h of a motorcar equipped with such a brake disk. The brake pads **2** are then pressed onto the brake disk rotor **3** with a pressure of **3** MPa (30 bar = 30 × 10⁵ Pa) until a velocity of 30 km/h is reached. Below this velocity, static friction is easily reached, for this reason the experiment is stopped at this speed. Average values of 6 consecutive brake periods are used to calculate the coefficient of friction. The brake performance *P* as is here used is defined as the average value of the coefficient of dynamic friction, µ_{w}, in phase (c) of the wet braking curve as recorded in Fig. 1, divided by the average value of the coefficient of dynamic friction, µ_{d}, in phase (c) of the dry braking curve for the same combination of brake disk ring and brake pad, and multiplied by 100 %: *P* = (µ_{w} / µ_{d}) × 100 %.

Various geometries were tested against this massive, non-grooved brake pad. A slight improvement was found with a circular groove as shown in Fig. 2a, concentric with the centre of the brake disk ring. Such circular grooves are more difficult to machine, and as their effect was not advantageous over linear grooves, such geometries were disregarded. In run 2, a brake pad was used that had two parallel grooves having an angle with the axis of mirror symmetry of the brake pad as depicted in Fig. 2b of 90°, and extending over the whole secant length. This geometry showed a slightly improved wet brake performance which was 57 %. A further run 3 was made with a brake pad having two grooves parallel to the axis of mirror symmetry of the brake pad, and extending over the whole radial length (Fig. 2c). This geometry showed a further improved wet brake performance which was 59 %. Arranging a series of six bores with a diameter of 3 mm each through the pad thickness (run 4) in the form of an upper case Lambda (Λ, Fig. 2d) only gave a wet brake performance of 56 %, while continuous grooves in the same Λ arrangement (run 5, Fig. 2e) had lead a wet brake performance of 62 %. A grid-like arrangement of the grooves (run 6, Fig. 2f) gave a still better wet brake performance (65 %), but a strong noise development upon braking, and a marked increase in wear of the brake pads was noted which were both inacceptable.

The best wet brake performance was achieved with at least two linear grooves, where at least two of these grooves are parallel to each other, and where the angle between each and any of the grooves and a straight line which is the axis of mirror symmetry of the brake pad and is parallel to a radius of the brake disk when the brake pad is used in combination with a brake disk, is between 30° and 85° or between 95° and 150° . The wet brake performance was still improved when more than two grooves were applied, but exceeding four grooves is to be avoided due to increasing wear of the brake pads, and noise development. The noise has found to be lowest in the range of angles as defined hereinbefore.

In the case of a Z-shaped arrangement of three grooves as shown in Fig. 3, with identical angles β of between 70° and 60° of the top and bottom stroke of the Z (grooves G1 and G3), and an angle γ between 40° and 50° of the middle stroke (groove G2) of the Z, in each case measured against the axis A of mirror symmetry, the optimum of water and steam removal was found. When the angles were chosen as 65° for β and 45° for γ, a wet brake performance of 67 % was reached. The arrows at the left of the figure show the direction of movement of the water film where the brake pad is stationary (= direction of rotation of the brake disk ring). The velocity of water in the grooves is represented by vectors v₁, and v₂.

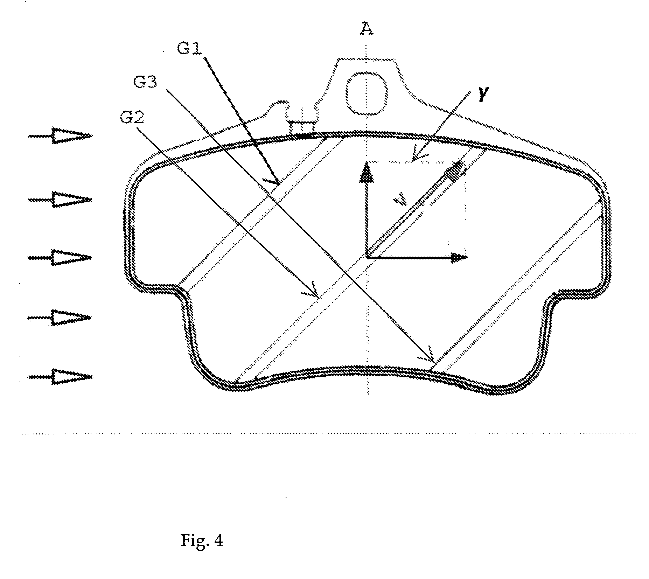

In Fig. 4, an arrangement of three grooves is shown which are all parallel and have an angle enclosed with the axis A of 45°. This arrangement has its optimum at moderate speeds of from 80 km/h to 100 km/h with a very steep rise. The wet brake performance in this case was 64 %. The arrows at the left of the figure show the direction of movement of the water film where the brake pad is stationary (= direction of rotation of the brake disk ring). The velocity of water in the grooves is represented by the vector v.

The same behaviour with respect to wet braking behaviour compared to dry braking is also seen when carbon fibre-reinforced carbon brake disk rings or carbon fibre-reinforced ceramic brake disk rings are used. This shows that the geometry of the brake pads has a decisive influence on the wet brake performance.

## Claims

1. A combination of a brake disk ring and at least one brake pad having three linear grooves, where at least two of these grooves are parallel to each other, and wherein the grooves are arranged in the form of a "Z" or of a "mirrored Z" herein referred to as an "S" formed by the sequence of grooves G1, G2 and G3 and where the angle between each and any of the grooves and a straight line which is the axis of mirror symmetry of the brake pad and is parallel to a radius of the brake disk when the brake pad is used in combination with a brake disk, is between 30° and 85° or between 95° and 150°.

2. The combination of claim 1 wherein the grooves have a width of between 1 mm and 5 mm.

3. The combination of claim 1 wherein the grooves have a depth of at least 2 mm.

4. Tle combination of claim 1 where the angle between the axis A and grooves G1 and G3 is the same angle β, and is between 70° and 60°.

5. The combination of claim 1 where the angle γ between the axis A and groove G2 is between 40° and 50°.

## Patentansprüche

1. Kombination eines Bremsscheibenrings mit wenigstens einem Bremsbelag mit drei geradlinigen Nuten, wobei wenigstens zwei dieser Nuten zueinander parallel sind, und wobei die Nuten in Form eines "Z" oder eines "gespiegelten Z", hier als "S" bezeichnet, durch die Folge der Nuten G1, G2 und G3 gebildet sind, und wobei der Winkel zwischen jeder der jeweiligen Nuten und einer geraden Linie, welche die Achse der Spiegelsymmetrie des Bremsbelages ist und parallel zu einem Radius des Bremsbelages ist, wenn der Bremsbelag in Kombination mit einer Bremsscheibe benutzt ist, zwischen 30° und 85° oder zwischen 95° und 150° beträgt.

2. Kombination gemäß Anspruch 1, wobei die Nuten eine Breite zwischen 1 mm und 5 mm aufweisen.

3. Kombination gemäß Anspruch 1, wobei die Nuten eine Tiefe von wenigstens 2 mm aufweisen.

4. Kombination gemäß Anspruch 1, wobei der Winkel zwischen der Achse A und den Nuten G1 und G3 gleich dem Winkel β ist, der zwischen 70° und 60° beträgt.

5. Kombination gemäß Anspruch 1, wobei der Winkel γ zwischen der Achse A und der Nut G2 zwischen 40° und 50° beträgt.

## Revendications

1. Combinaison d'une disque de frein et au moins une plaquette de frein ayant trois rainures rectilignes, dans laquelle au moins deux de ces rainures sont parallèles les unes aux autres, et dans laquelle les rainures sont formées en forme de "Z" ou de "Z miroité", designée ici par "S", par des rainures G1, G2 et G3, et dans laquelle l'angle entre chacune et toutes les rainures et une ligne droite, qui est l'axe de la symétrie de la plaquette de frein et qui est parallèle a un rayon du disque de frein lorsque la plaquette de frein est utilisée en combinaison avec une disque de frein, est compris entre 30° et 85° ou entre 95° et 150°.

2. Combinaison selon la revendication 1, dans laquelle les rainures ont une largeur comprise entre 1 mm et 5 mm.

3. Combinaison selon la revendication 1, dans laquelle les rainures ont une profondeur d'au moins 2 mm.

4. Combinaison selon la revendication 1, dans laquelle l'angle entre l'axe A et les rainures G1 et G3 est égale à l'angle β, qui est compris entre 70° et 60°.

5. Combinaison selon la revendication 1, dans laquelle l'angle γ entre l'axe A et la rainure G2 est compris entre 40° et 50°.
